# EUROPÄISCHE PATENTSCHRIFT

(11) **EP 1 404 595 B1**
(45) Veröffentlichungstag und Bekanntmachung des Hinweises auf die Patenterteilung: **19.10.2005**
(21) Anmeldenummer: 02760095.6
(22) Anmeldetag: 10.07.2002
(51) Int. Cl.: B65G 1/00, B65G 1/127, B65G 1/04

(54) **LAGERSYSTEM MIT ZUGRIFFSKONTROLLSYSTEM**
STORAGE SYSTEM WITH ACCESS CONTROL SYSTEM
SYSTEME DE STOCKAGE COMPORTANT UN SYSTEME DE CONTROLE D'ACCES

(30) Priorität: 12.07.2001 DE 10135084
(43) Veröffentlichungstag der Anmeldung: 07.04.2004
(73) Patentinhaber: Bellheimer Metallwerk GmbH, 76752 Bellheim (DE)
(72) Erfinder: EVANS, James, V., Maple Valley, WA 98038 (US); ROBEY, Timothy, Windham, ME 04062 (US); ROY, Paul, Lewistone, ME 04240 (US)
(74) Vertreter: Grünecker, Kinkeldey, Stockmair & Schwanhäusser Anwaltssozietät
(86) Internationale Anmeldenummer: PCT/DE2002/002569
(87) Internationale Veröffentlichungsnummer: WO 2003/006345

(56) Entgegenhaltungen:
- EP-A- 1 061 013
- WO-A-00/05164
- US-A- 5 599 154
- US-A- 6 056 134

## Beschreibung

### Technisches Gebiet

Die Erfindung betrifft ein Lagersystem umfassend einen Lagerbereich zur Einlagerung von Lagergut in wenigstens einen Lagerplatz, einen vom Lagerbereich örtlich getrennten Zugriffsbereich zum Zugriff auf das im Zugriffsbereich befindliche Lagergut, ein Fördermittel zum Transport des Lagerguts zwischen dem Lagerplatz und dem Zugriffsbereich, und einen Förderschacht. in dem das Fördermittel in einer Förderrichtung hin- und her beweglich aufgenommen ist und der in Förderrichtung zwischen dem Lagerbereich und dem Zugriffsbereich angeordnet ist.

### Stand der Technik

Ein gattungsgemäßes Lagersystem ist beispielsweise aus der DE 92 13 478 U1 bekannt. In dieser Druckschrift ist ein Lagerlift gezeigt und beschrieben, bei dem eine rechnergesteuerte Beschickungs- und Entnahmevorrichtung in einem zwischen zwei Regalsäulen angeordneten Schacht geführt ist. Das Lagergut ist auf Lagergutträgern in den Einzelregalen gelagert. Die Beschickungs- und Entnahmevorrichtung fördert das Lagergut von seinen Lagerplätzen in den Einzelregalen zu einer Beschickungs- und Entnahmeöffnung und zurück. Durch die Beschickungs- und Entnahmeöffnung wird das Lagergut ein- oder ausgelagert.

Ein weiteres gattungsgemäßes Lagersystem ist aus dem nächstkommenden Stand der Technik, der US 6,056,134 bekannt. Bei diesem Lagersystem wird der Lagergutträger ebenfalls zum Zugriff vom Lagerbereich in den Zugriffsbereich transportiert. Im Zugriffsbereich liegt der Lagergutträger auf einer stationären Plattform auf.

Die EP 1 061 013 A1 zeigt ein Umlaufregal gemäß dem Patemoster-Prinzip, bei dem eine senkrechte Zugangsöffnung mit einer Schließeinrichtung vorgesehen ist Die Schließeinrichtung weist mindestens zwei gegenüberliegend angeordnete Schließelement auf, die in Horizontalrichtung verschiebbar sind.

Beim Betrieb eines derartigen Lagersystems hat sich als nachteilig herausgestellt, dass das Lagergut im Bereich der Beschickungs- und Entnahmeöffnung von jedermann entnommen und unter Umständen entwendet werden kann.

### Darstellung der Erfindung

Angesichts der geschilderten Nachteile liegt der vorliegenden Erfindung daher die Aufgabe zugrunde, ein Lagersystem mit einem Lagerbereich und einem örtlich vom Lagerbereich getrennten Zugriffsbereich sowie ein System zu dessen Verwaltung zu schaffen, bei dem der Zugriff auf zumindest einen Teil des eingelagerten Lagerguts beschränkt ist.

Erfindungsgemäß wird diese Aufgabe durch ein dem Zugriffsbereich zugeordnetes Zugriffskontrollsystem mit einer Sperre gelöst, die als eine im Wesentlichen horizontale Plattform ausgebildet und in Abhängigkeit von einem Zugriffsberechtigungscode eines Benutzers zumindest abschnittsweise von einem Sperrzustand, in welchem der Zugriff auf das Lagergut versperrt ist, in einen Freigabezustand überführbar ist, in welchem der Zugriff auf das Lagergut freigegeben ist.

Bei dieser Lösung gibt das erfindungsgemäße Zugriffskontrollsystem des Lagersystems den Zugriff nur auf denjenigen Teil des Lagerguts frei, auf den ein Benutzer seine Zugriffsberechtigung mittels des ihm zugeordneten Zugriffsberechtigungscodes nachweisen kann.

Die Sperre erfüllt erfindungsgemäß eine Doppelfunktion als horizontale Plattform und damit Arbeitsfläche des Lagersystems und als Teil des Zugriffskontrollsystems des Lagersystems. Bei der erfindungsgemäßen Lösung wird nicht, wie bei den herkömmlichen Lagersystemen mit getrenntem Zugriffs- und Lagerbereich, das Lagergut in einen über der Plattform liegenden Zugriffsbereich gefördert. Der Zugriffsbereich ist vielmehr unterhalb der Plattform angeordnet. An der Stelle des Zugriffsbereichs befindet sich bei dem aus dem Stand der Technik bekannten Lagersystem üblicherweise ein Lagerbereich.

Um die Zugriffsberechtigung eines Benutzers auf ein Lagergut festzustellen, ist jedem Lagergut ein Freigabecode zugeordnet, der dann vom Zugriffskontrollsystem mit dem Zugriffsberechtigungscode des Benutzers verglichen wird. Nur wenn sich aus dem Vergleich ergibt, dass der Benutzer auf das Lagergut zugreifen kann, wird der Zugriff vom Zugriffskontrollsystem auf das mit dem entsprechenden Freigabecode versehene Lagergut freigegeben.

Folglich ist es bei der erfindungsgemäßen Lösung möglich, den Missbrauch des Lagerguts durch freien Zugriff für jedermann einzudämmen.

Bei manchen Lagersystemen oder Lagerliften mit getrenntem Lagerbereich und Zugriffsbereich wird das Lagergut auf Lagergutträgern, wie beispielsweise Behältern oder Tablaren, aufbewahrt und zusammen mit dem Lagergutträger in den Zugriffsbereich transportiert. Die Lagergutträger können hierzu Fächer aufweisen, in denen verschiedene Lagergüter getrennt voneinander aufbewahrt werden. Wird ein solcher Lagergutträger in den Zugriffsbereich transportiert, so kann gemäß einer vorteilhaften Ausgestaltung das Lagersystem in der Lage sein, den Zugriff nur auf denjenigen Teil der Fächer bzw. der Lagergüter freizugeben, zu denen gemäß dem Zugriffsberechtigungscode der Benutzer berechtigt ist. Diese einzelnen Teilbereiche können je nach Anordnung der Lagergüter oder Fächer auf dem Lagergutträger zusammenhängend oder getrennt angeordnet sein.

Eine konstruktiv besonders einfache Lösung für das Zugriffskontrollsystem wird dann erhalten, wenn die Sperre zwischen dem Lagergut und dem Benutzer angeordnet ist.

Die Sperre kann insbesondere auch als Schott, Deckel oder Tür bzw. eine Kombination von Schotten, Deckeln oder Türen ausgebildet sein, die im Sperrzustand verschlossen und im Freigabezustand geöffnet ist bzw. sind.

Um Lagergut unterschiedlicher Größen einzulagern, kann das Lagersystem gemäß einer vorteilhaften Ausgestaltung mit einem Größenerfassungsmittel zur Erfassung der Abmessungen des Lagerguts versehen sein. Beispielsweise kann von einem solchen Größenerfassungsmittel beim Einlagern die Lagerguthöhe erfasst und abgespeichert werden. In Abhängigkeit von den Abmessungen wird das Lagergut in den Zugriffsbereich in einem entsprechenden Abstand von der Sperre überführt. Bei dieser Ausgestaltung ist also die Lage des Zugriffsbereichs abhängig von der Größe des Lagerguts, auf das der Zugriff freigegeben werden soll. Bei dieser Ausgestaltung werden Kollisionen des Lagerguts mit der Sperre vermieden und die Sicherheit gegen Missbrauch erhöht, da zwischen dem Lagergut und der Sperre nur geringe Spalte verbleiben.

Wenn bei dem Lagersystem Lagergutträger verwendet werden, in denen stets mehrere Lagergüter, unter Umständen mit jeweils unterschiedlichen Zugriffsberechtigungen, in Fächern eingelagert sind, so ist es von Vorteil, wenn gemäß einer weiteren Ausgestaltung die Sperre eine Mehrzahl von Teilsperren aufweist, durch die jeweils ein Teilabschnitt des Zugriffsbereichs in Abhängigkeit vom Zugriffsberechtigungscode vom Sperrzustand in den Freigabezustand überführbar ist. Vorzugsweise ist einer Teilsperre ein Fach eines sich im Zugriffsbereich in einer Zugriffsposition befindlichen Lagergutträgers zugeordnet.

Die Größe der Teilsperren ist vorteilhaft so bemessen, dass eine Teilsperre oder eine Kombination von aneinandergrenzenden Teilsperren genau ein Fach eines Lagergutträgers versperrt. Durch die Anpassung der Abmessungen der Teilbereiche der Sperre an die Abmessungen der Fächer der Lagergutträger bzw. der Abmessungen der Lagergüter wird der Zugriff auf genau dasjenige Lagergut freigegeben, für das eine Zugriffsberechtigung besteht, ohne dass eine Zugriffsmöglichkeit auf Fächer besteht, für das keine Zugriffsberechtigung vorliegt.

Die Teilsperren können vorteilhaft als Klappen ausgebildet sein, die schwenkbar oder verschieblich an der Sperre gehalten sind.

Um bei dem Lagersystem einen unbefugten Zugriff generell zu erschweren, sollten alle die Öffnungen am Lagersystem verschlossen sein, durch die einen Zugang zum Inneren des Lagersystems möglich ist. Folglich ist darauf zu achten, dass im Freigabezustand der Sperre keine Möglichkeit besteht, ins Innere des Lagersystems zu gelangen. Es soll lediglich der Zugriff auf das freigegebene Lagergut möglich sein. Dies wird beispielsweise durch bündig mit dem Lagergutträger in der ersten Zugriffsposition abschließende Sperren erreicht, die keine oder nur geringe Spalte bilden.

Neben dem gerade beschriebenen ersten Zugriffsbereich kann das Lagersystem in einer weiteren vorteilhaften Ausgestaltung einen weiteren, zweiten, Zugriffsbereich für das Lagergut aufweisen. Dieser zweite Zugriffsbereich unterscheidet sich in funktioneller Hinsicht vom ersten Zugriffsbereich dadurch, dass er einen Zugriff auf das Lagergut in einer zweiten Zugriffsposition im Wesentlichen ohne Einwirkung des Zugriffskontrollsystems ermöglicht. In räumlicher Hinsicht kann sich der zweite Zugriffsbereich durch seine vom ersten Zugriffsbereich unterschiedliche Lage unterscheiden: Im zweiten Zugriffsbereich ist das Lagergut zwischen der Sperre und dem Benutzer angeordnet, so dass der Benutzer im Wesentlichen freien Zugriff auf das Lagergut hat. Die Verwendung des zweiten Zugriffsbereichs ermöglicht die Ein- und Auslagerung von sperrigem Lagergut, das aufgrund seiner Abmessungen nicht durch die Sperre oder die Teilsperren passen würde.

Bei der Ausgestaltung mit einem zweiten Zugriffsbereich ist gemäß einer vorteilhaften Weiterbildung eine innere Sperre vorgesehen, die dem zweiten Zugriffsbereich zugeordnet und zwischen dem zweiten Zugriffsbereich und dem Lagerbereich angeordnet ist. Diese Sperre wird zum Transport des Lagerguts vom Lagerbereich in den zweiten Zugriffsbereich geöffnet und verschlossen, sobald das Lagergut sich in der zweiten Zugriffsposition befindet. Durch diese Sperre wird eine Eintragsöffnung versperrt, durch die das Lagergut vom Fördermittel in den zweiten Zugriffsbereich eingebracht wird.

Die zweite Sperre kann von der Sperre für den ersten Zugriffsbereich gebildet sein, so dass die Sperre eine Doppelfunktion im Hinblick auf die beiden Zugriffsbereiche erfüllt. Alternativ kann auch eine zweite Sperre zusätzlich zur Sperre des ersten Sperrbereichs vorgesehen sein, die unabhängig von der ersten Sperre betätigt werden kann.

In einer weiteren Ausgestaltung kann eine äußere Sperre vorgesehen sein, die dem zweiten Zugriffsbereich zugeordnet und zwischen dem zweiten Zugriffsbereich und dem Benutzer angeordnet ist. Durch die äußere Sperre kann der Zugriff auf das Innere des Lagersystems versperrt ist, wenn die innere Sperre geöffnet ist.

In einer weiteren vorteilhaften Ausgestaltung kann der zweite Zugriffsbereich als eine Art Schleuse betrieben werden, so dass beim Transport von Lagergut zwischen dem zweiten Zugriffsbereich und dem Lagerbereich zu keiner Zeit Zugang zum Inneren des Lagersystems besteht. Die innere Sperre verschließt dabei die lagerbereichsseitige Eintragsöffnung, während die äußere Sperre geöffnet ist.

Wird bei dieser Ausgestaltung beispielsweise ein Lagergutträger durch das Fördermittel vom Lagerbereich in den Zugriffsbereich transportiert, so wird zunächst die äußere Sperre geschlossen und danach die innere Sperre geöffnet, so dass der Lagergutträger durch die Eintragsöffnung in den Zugriffsbereich transportiert werden kann. Befindet sich der Lagergutträger im Zugriffsbereich, wird die innere Sperre verschlossen und danach die äußere Sperre geöffnet. In dieser Position ist dann der Zugriff auf den Lagergutträger möglich, der Zugang zum Lagerbereichsinneren jedoch durch die innere Sperre gesperrt.

Beim Einlagern von Lagergut kann dieser Vorgang in entsprechend umgekehrter Reihenfolge durchgeführt werden, wenn das einzulagernde Lagergut im Zugriffsbereich abgelegt wurde. Das Zugriffskontrollsystem kann den Zugang zum Lagergut in einer weiteren vorteilhaften Ausgestaltung auch vor dem Zugriff des Fördermittels auf das Lagergut im Lagerbereich oder auf das Lagergut im Zugriffsbereich sperren. Wird beispielsweise festgestellt, dass ein Benutzer für die Entnahme des gesamten Lagerguts auf einem Lagergutträger keine Berechtigung hat, so wird bei dieser Ausgestaltung das Lagersystem dem Benutzer lediglich die mangelnde Zugriffsberechtigung signalisieren, das Lagergut aber nicht aus dem Zugriffsbereich oder dem Lagerbereich entfernen.

In einer alternativen, platzsparenden Ausgestaltung des Lagersystems, bei der der erste und der zweite Zugriffsbereich räumlich zusammenfallen und sich lediglich in funktioneller Hinsicht durch die Freigabe des Zugriffsbereichs unterscheiden, kann die Sperre des ersten Zugriffsbereichs gleichzeitig als äußere Sperre des zweiten Zugriffsbereichs dienen. Bei dieser Ausgestaltung kann die Sperre des ersten Zugriffsbereichs als Ganzes in den Freigabezustand überführt werden, um das Lagergut freizugeben.

Im folgenden wird der Aufbau und die Funktion der Erfindung anhand von Ausführungsbeispielen näher erläutert.

### Kurze Beschreibung der Zeichnungen

Es zeigen:
- Figur 1: eine perspektivische Ansicht eines ersten Ausführungsbeispiels eines erfindungsgemäßen Lagersystems;
- Figur 2: das Lagersystem der Figur 1 mit einem Lagergutträger bei der Entnahme von Lagergut;
- Figur 3: das Lagersystem der Figur 1 mit einem Lagergutträger beim Einlagern von Lagergut;
- Figur 4: ein weiteres Ausführungsbeispiel eines Lagersystems mit einem zweiten Zugriffsbereich und einem Schleusensystem;
- Figur 5: das Lagersystem der Figur 4 bei der Entnahme von Lagergut aus der zweiten Zugriffsposition;
- Figur 6: ein drittes Ausführungsbeispiel des Lagersystems.

### Wege zur Ausführung der Erfindung

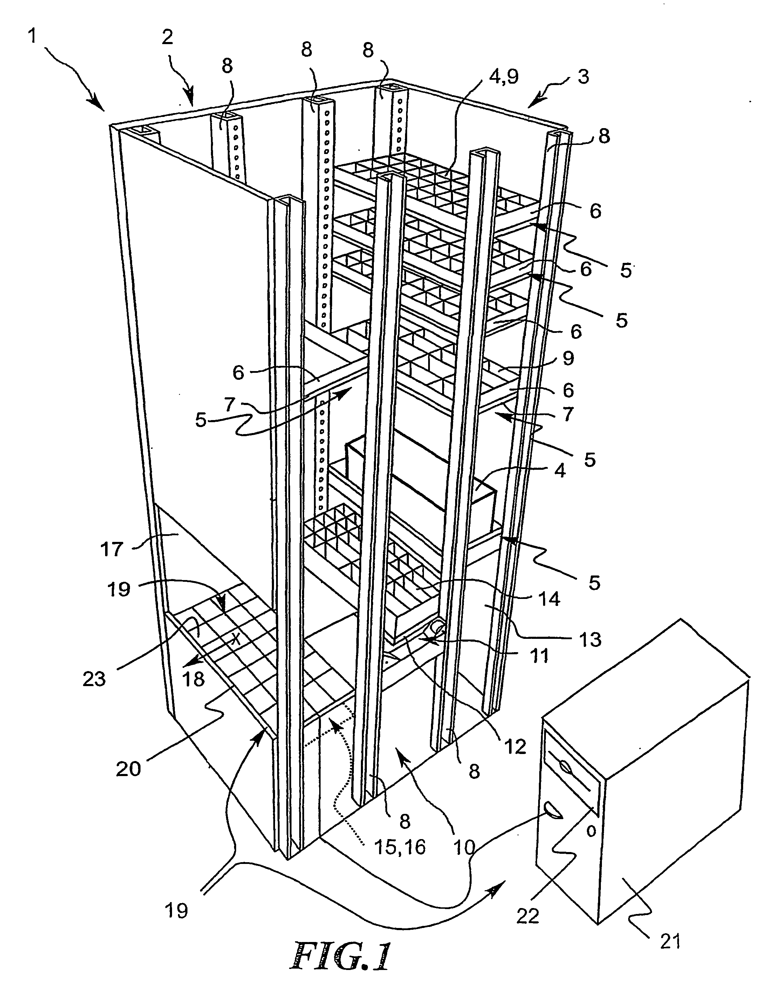

Zunächst werden Aufbau und Funktion eines erfindungsgemäßen Lagersystems 1 mit Bezug auf die Figur 1 beschrieben. In Figur 1 sind dabei die dem Betrachter zugewandten Seitenwände weggelassen, um einen Einblick in das Innere des Lagersystems 1 zu gewähren.

Das Lagersystem 1 weist zwei schachtförmige Lagerbereiche 2, 3 in Form von Regalsäulen auf, in denen Lagergut 4 eingelagert ist. Die Anzahl der Lagerbereiche im Lagersystem ist beliebig. In Figur 1 sind die Lagerbereiche 2, 3 in Form einer Regalsäule mit in senkrechter Richtung übereinander liegenden, stationären Lagerplätzen 5 aufgebaut. In den jeweiligen Lagerplätzen 5 der Lagerbereiche 2, 3 ist das Lagergut 4 durch Lagergutträger 6, 7 gehalten, die in entsprechenden Lagergerüsten 8 aufgenommen sind. Das Lagergerüst 8 bildet dazu an den jeweiligen Lagerplätzen 5 schienenförmige Haltemittel für die Lagergutträger 6, 7 aus.

Die Lagergutträger 6, 7 können unterschiedlich ausgestaltet sein. Beispielsweise können die Lagergutträger 6 mit Fächern 9 versehen sein, in denen jeweils verschiedene Lagergüter sortiert eingelagert sind. Die Größe und Anordnung der Fächer 9 kann sich dabei in Abhängigkeit vom eingelagerten Lagergut unterscheiden. Ein Teil der Lagergutträger 6, 7 kann auch als Tablare 7 ausgestaltet sein, deren Form im Wesentlichen einer Plattform oder einem Regalbrett entspricht. Auf den Tablaren 7 kann Lagergut 4 direkt oder in Lagergutträgern 6 abgelegt werden.

Zwischen den Lagerbereichen 2, 3 ist ein Förderschacht 10 angeordnet, in dem sich ein Fördermittel 11 bewegt. Beim Ausführungsbeispiel der Figur 1 dienen die jeweils dem Förderschacht zugewandten Lagergerüste 8 gleichzeitig als Führungen für das Fördermittel 11. Dadurch ist das Fördermittel 11 entlang der Lagerplätze 5 - in Fig. 1 ist dies im Wesentlichen in senkrechter Richtung nach oben und unten - geführt.

Das Fördermittel 11 ist mit einem Greifsystem (in Fig. 1 nicht zu erkennen), wie es beispielsweise aus dem Stand der Technik bekannt ist, ausgestattet. Das Fördermittel wirkt jeweils mit einem Lagergutträger 6, 7 zusammen und bewegt die Lagergutträger vom jeweiligen Lagerplatz 5 in den Förderschacht 10 und umgekehrt. Das Greifmittel kann beispielsweise als ein umlaufender Finger am Fördermittel ausgestaltet sein, der in eine entsprechende lagergutseitige Fingeraufnahme eingreift. Auch hydraulisch betätigte Teleskoparme können als Greifmittel dienen. Das Fördermittel 11 mitsamt dem Greifsystem wird durch eine nicht dargestellte Steuereinrichtung automatisch gesteuert.

In Figur 1 ist das Lagersystem 1 in einem Zustand gezeigt, in dem gerade ein Lagergutträger 12 vom Fördermittel 11 aus dem zugeordneten Lagerplatz 13 in den Förderschacht 10 gezogen wird. Wie in Figur 1 zu erkennen ist, sind die Fächer 14 des Lagergutträgers 12 größer und tiefer als diejenigen der Lagergutträger 6, so dass in den Fächern 14 größeres Lagergut eingelagert werden kann. Um Lagergüter 4 und Lagergutträger 6, 7, 12 verschiedener Größe verwalten zu können, ist das Lagersystem 1 mit einem Größenerfassungsmittel (nicht gezeigt) ausgestattet, durch das wenigstens die Höhe und/oder andere Abmessungen des Lagerguts 4 bzw. der Lagergutträger 6, 7, 12 erfasst werden.

Das Fördermittel 11 transportiert Lagergut 4 oder Lagergutträger 6, 7 zwischen den jeweiligen Lagerplätzen 5 in den Lagerbereichen 2, 3 und einer Zugriffsposition 15 in einem örtlich vom Lagerbereich 2, 3 getrennten Zugriffsbereich 16, der in Figur 1 schematisch mit Punktlinien dargestellt ist. Im Zugriffsbereich 16 ist ein Zugriff auf das Lagergut 4 bzw. die Lagergutträger 6, 7 von außerhalb des Lagersystems 1, d. h. ein Ein- und Auslagern von Lagergut und Lagergutträger, möglich. Der Zugriff auf das Lagergut 4 im Zugriffsbereich 16 findet durch die Zugriffsöffnung 17 hindurch in einer Zugriffsrichtung 18 statt.

Durch ein Zugriffskontrollsystem 19, das dem Zugriffsbereich 16 zugeordnet ist, wird der Zugriff auf das Lagergut im Zugriffsbereich 16 kontrolliert freigegeben oder gesperrt. Das Zugriffskontrollsystem weist hierzu eine Sperre 20 auf, die oberhalb des Zugriffsbereichs 16, also zwischen einem Benutzer und dem Zugriffsbereich 16, angeordnet ist. Die Sperre 20 dient gleichzeitig als Plattform des Lagersystems und verhindert einen unbefugten Zugriff auf Lagergut 4 im Zugriffsbereich 16. Im Unterschied zu herkömmlichen Lagersystemen befindet sich beim Ausführungsbeispiel der Fig. 1 der Zugriffsbereich 16 mit der Zugriffsposition 15 für das Lagergut unterhalb der Plattform 20.

Durch das Größenerfassungsmittel wird beim Einlagern die Höhe des Lagergutes 4 bzw. des Lagergutträgers 6, 7 festgestellt und abgespeichert. Beim Auslagern wird diese Information wieder abgerufen und das Lagergut 4 bzw. der Lagergutträger 6, 7 vom Fördermittel 11 in einen entsprechenden Abstand unterhalb der Sperre 20 in die Zugriffsposition 15 des Zugriffsbereichs 16 überführt.

Im Folgenden werden der Aufbau und die Funktion des Zugriffskontrolisystems 19 und der Sperre 20 genauer erläutert:

Das Zugriffskontrollsystem 19 weist neben der Sperre 20 ein Steuermodul 21 mit einem Eingabegerät 22 auf, durch das ein Benutzer einen ihm vorbestimmten Zugriffsberechtigungscode eingibt. Als Benutzer ist dabei im Falle eines manuellen Zugriffs eine auf das Lagergut 4 zugreifende Person, im Falle eines automatischen Zugriffs durch automatische Entnahmesysteme das jeweilige zugreifende System, beispielsweise ein Entnahmeroboter, zu verstehen.

Das Eingabegerät 22 kann beispielsweise als Kartenleser für Chip- oder Magnetkarten, als Tastatur, Scanner oder als berührungsfrei arbeitendes Transpondersystem ausgestaltet sein.

Durch den Zugriffsberechtigungscode kann das Lagersystem 1 über eine automatisch geführte Inventarliste, in der jeweils der Lagerplatz 5 und ein Freigabecode des eingelagerten Lagerguts abgelegt sind, feststellen, ob der Benutzer für den jeweiligen Zugriff berechtigt ist. Hierzu werden vom Zugriffskontrollsystem 19 der dem Lagergut 3 zugeordnete Freigabecode und der dem Benutzer zugeordnete Zugriffsberechtigungscode miteinander verglichen. In Abhängigkeit vom Ergebnis dieses Vergleichs wird das Zugriffskontrollsystem 19 die Sperre 20 zumindest abschnittsweise von einem Sperrzustand, in dem wegen mangelnder Zugriffsberechtigung kein Zugriff auf das Lagergut möglich ist, in einen Freigabezustand überführt, in dem wegen einer bestehender Zugriffsberechtigung des Benutzers der Zugriff auf das Lagergut im Zugriffsbereich 16 möglich ist.

Die Zugriffsberechtigungs- und Freigabecodes können hierarchisch gestaffelt sein, so dass ein Zugriffsberechtigungscode mit einer hohen Zugriffsberechtigung Zugang zu den Lagergütern 4 oder Lagergutträgern 6, 5 ermöglicht, die mit einem Freigabecode niedrigerer Berechtigung versehen sind. Bei großen Lagersystemen oder bei komplexen Lageraufgaben können auch mehrere Zugriffshierarchien nebeneinander implementiert sein.

Der Zugriff kann bei Lagergutträgern 6, die mehrere Lagergüter aufnehmen, in Abhängigkeit vom Zugriffsberechtigungscode durch das Zugriffskontrollsystem 19 auf nur einen Teil des Lagergutes 4 im Lagergutträger 6 eingeschränkt werden, wenn sich der Lagergutträger 6 in der Zugriffsposition 15 befindet.

Die nur teilweise Freigabe von Lagergut eines Lagergutträgers 6 im Zugriffsbereich 16 wird im Folgenden genauer beschrieben.

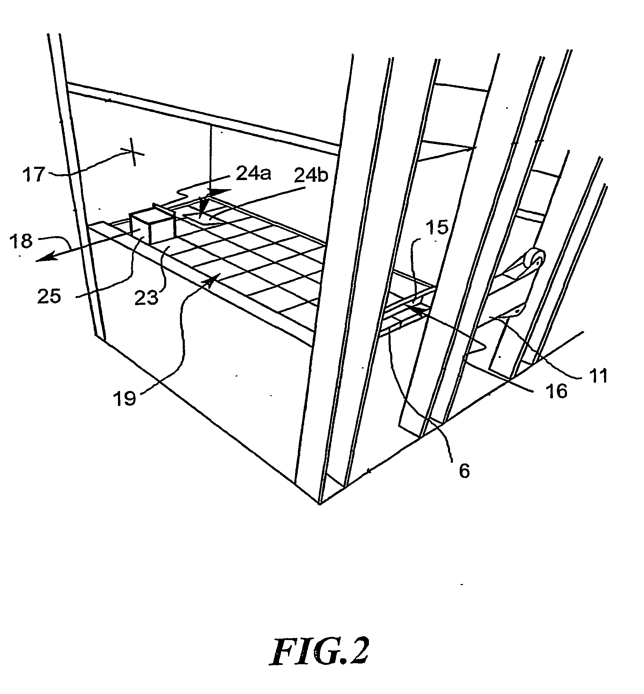

In der Zugriffsposition 15 des Zugriffsbereichs 16 ist der Lagergutträger 6 zumindest abschnittsweise, in Figur 2 vollständig, durch die Sperre 20 des Zugriffskontrollsystems 19 abgedeckt, so dass eine freies Ein- und Auslagern von Lagergut 4 unter Umgehung des Zugriffskontrollsystems 19 nicht möglich ist.

Um den Zugriff nur auf einzelne Teilabschnitte eines Lagergutträgers 6 zu ermöglichen, ist die Sperre 20 in Teilsperren 23 unterteilt. Jede Teilsperre 23 ist als ein separat ansteuerbares Abdeckelement ausgestaltet, das in Abhängigkeit vom Zugriffsberechtigungscode des Benutzer und dem Freigabecode des Lagerguts den Zugang auf den darunter liegenden Bereich unabhängig von anderen Teilsperren freigibt oder sperrt. Die Teilsperren 23 der Sperre 20 bilden ein Feld, das zusammen eine Seite des Zugriffsbereichs abdeckt. Die Abmessungen des Feldes entsprechen in etwa den Abmessungen eines Lagergutträgers. Dabei sind in dem dargestellten Ausführungsbeispiel die Teilsperren 23 als klappenförmige Deckel ausgestaltet, die in mehreren parallelen Reihen nebeneinander angeordnet und durch Stege, in denen die Schwenklagerungen der Deckel aufgenommen sind, voneinander getrennt sind.

In Figur 2 ist dargestellt, wie zwei Teilsperren 24a, 24b geöffnet sind. Die Teilsperre 24a ist zum Zugriff auf ein Lagergut 25 im vollständig aufgeklappten Zustand und die Teilsperre 24b im teilweise aufgeklappten Zustand dargestellt. Die Teilsperren sind jeweils den Fächern 9 eines Lagergutträgers zugeordnet und so angeordnet, dass sie die Fächer 9 eines Lagergutträgers in der Zugriffsposition möglichst vollständig überdecken.

Die Abmessungen der Fächer 9 und des von einer einzelnen Teilsperre 23 abgedeckten Bereichs sind insbesondere so aufeinander abgestimmt, dass durch Öffnen einer Teilsperre 23 oder einer Kombination von aneinander angrenzenden Teilsperren 23 der Zugriff genau auf jeweils ein Fach 9 oder genau auf jeweils eine Kombination aneinandergrenzender Fächer 9 mit gleichem Freigabecode möglich ist. Durch diese Ausgestaltung wird verhindert, dass beim Öffnen einer Teilsperre 23 der Zugriff auf Fächer möglich ist, für die der Benutzer keine Zugriffsberechtigung hat, die aber ansonsten zum Teil in den von der Teilsperre 23 freigegebenen Bereich ragen würden. Die Größe einer Teilsperre 23 entspricht also der Größe eines Faches 9 oder einem ganzzahligen Vielfachen dieser Größe.

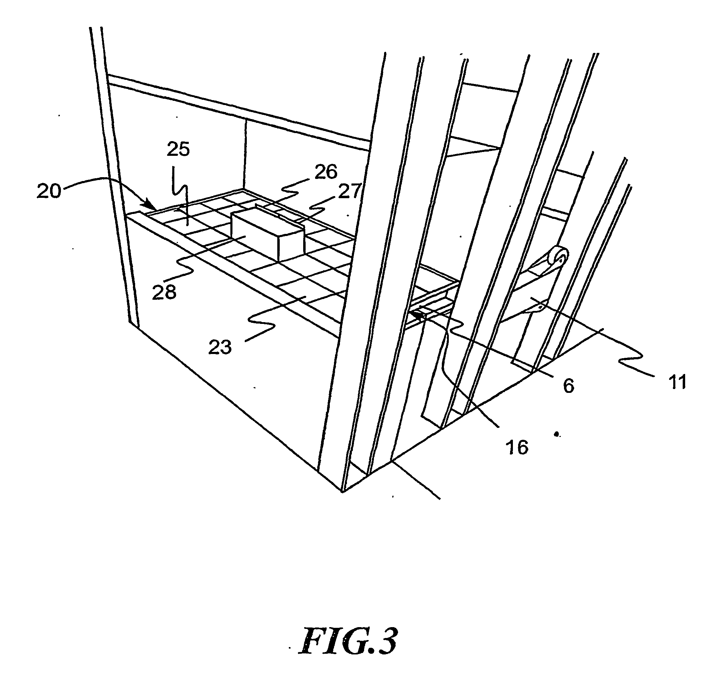

In Figur 3 ist das Lagersystem 1 bzw. das Zugriffskontrollsystem in einem Zustand dargestellt, in dem aufgrund eines gegenüber der Figur 2 veränderten Zugriffsberechtigungscodes die aneinander angrenzenden Teilsperren 26, 27 freigegeben sind. Durch die geöffneten Teilsperren 26, 27 ist der Zugriff auf das Lagergut 28 frei. Im Unterschied zur Figur 2 ist in Figur 3 aufgrund eines unterschiedlichen Zugangsberechtigungssignals die Teilsperre 24 gesperrt, da bei dem in Figur 3 dargestellten Vorgang der Benutzer keine Berechtigung zum Zugriff auf das von der Teilsperre 23 abgedeckte Lagergut 25 hat.

Wie in Figur 3 zu erkennen ist, ist das gerade entnommene Lagergut 28 größer als das Lagergut 25 der Figur 2. Demzufolge müssen für den Zugriff auf das Lagergut 28 die beiden aneinandergrenzenden Deckel 26 und 27 freigegeben werden. Um den Zugriff auf die benachbarten Fächer im Lagergutträger 6 in der Zugriffsposition 15 zu verhindern, entspricht die Größe des durch die Teilsperren 26, 27 freigegebenen Bereichs genau der Größe des Faches, in dem das Lagergut 28 aufgenommen ist.

Die Sicherheit des Zugriffskontrollsystems 19 gegen Manipulationen von außen kann dadurch nochmals erhöht werden, dass zwischen den Fächern 9 und der Sperre 20 ein möglichst geringer Spalt vorhanden ist, der die Entnahme von Lagergut oder die Manipulation der Sperre durch den Spalt verhindert.

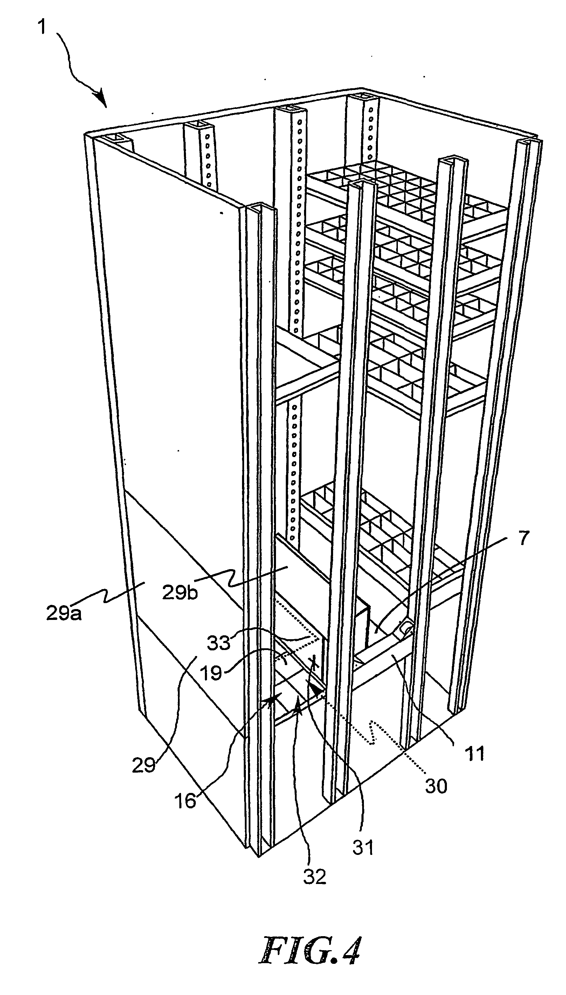

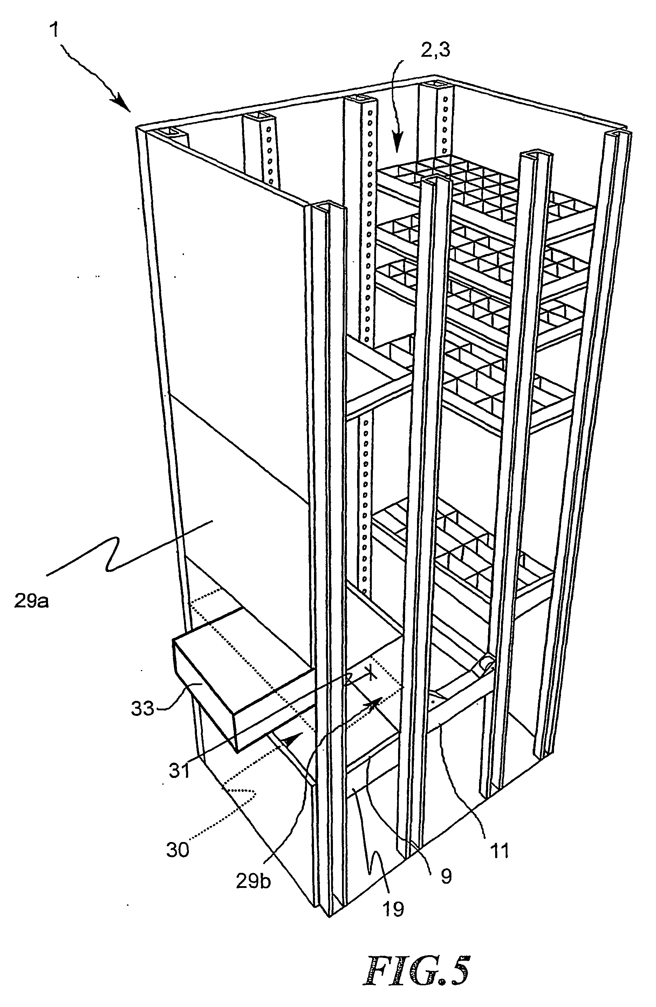

In den Figuren 4 und 5 ist ein zweites Ausführungsbeispiel des Lagersystems dargestellt. Bei den Figuren 4 und 5 werden für Elemente, deren Aufbau und Funktion den Elementen des Ausführungsbeispiels der Figuren 1 bis 3 entspricht, dieselben Bezugszeichen verwendet.

Das Ausführungsbeispiel der Figuren 4 und 5 ist zusätzlich zu der Sperre 20 mit einer äußeren Sperre 29a und einer inneren Sperre 29b und einem zweiten Zugriffsbereich 30 versehen. Der zweite Zugriffsbereich 30 ist in den Figuren 4 und 5 punktiert dargestellt. Die Sperren 29a, 29b wirken nach Art eines Schleusensystems zusammen und sind dem zweiten Zugriffsbereich 30 zugeordnet. Der zweite Zugriffsbereich 30 befindet sich oberhalb der Sperre 20 und ermöglicht daher einen Zugriff auf das Lagergut ohne Einwirkung des Zugriffskontrollsystems.

Die vordere bzw. äußere Sperre 29a ist als eine von oben nach unten, quer zur Zugriffsrichtung 18 verschiebliche Tür ausgestaltet, die im Wesentlichen in der Ebene der Zugriffsöffnung 17 verschieblich ist. Die innere Sperre 29b ist an der dem Lagerbereichen 2, 3 gewandten Seite des Zugriffsbereichs 16 angeordnet und ebenfalls als eine Schiebetür ausgestaltet. Die Sperre 17 versperrt eine Eintragsöffnung 31, durch die Lagergut 4 oberhalb des Zugriffskontrollsystems 19 vom Fördermittel 11 in eine zweite Zugriffsposition 32 im zweiten Zugriffsbereich 30 transportiert wird.

Der zweite Zugriffsbereich 30 kann zur Beschickung von Lagergutträgern mit Lagergut durch einen Benutzer mit hoher Zugriffsberechtigung oder zur Ein- und Auslagerung von sperrigem Lagergut, das durch die Sperre 20 des ersten Zugriffsbereichs 16 nicht hindurchpasst, verwendet werden.

Die Auslagerung eines sperrigen Einzelguts 33 mit Hilfe des Schleusensystems 29a, 29b wird nun anhand der Figuren 4 und 5 beschrieben.

Das sperrige Einzelgut 33 auf dem Tablar 7 wird durch das Fördermittel 8 vom Lagerplatz in den zweite Zugriffsbereich 16 oberhalb der Sperre 20 gebracht.

Um zu verhindern, dass während der Überführung des Einzelguts 33 in den zweiten Zugriffsbereich 30 Unbefugte durch die Eintragsöffnung 31 Zugang zum Inneren des Lagersystems erhalten, wird zunächst die äußere Sperre 29a herab gefahren und die Zugriffsöffnung 17 verschlossen. Erst danach wird die innere Sperre 29b nach oben gefahren, um die Eintragsöffnung 31 freizugeben, durch die hindurch das Einzelgut 33 vom Fördermittel 11 in die zweite Zugriffsposition 32 innerhalb des Zugriffsbereichs 16 bewegt wird.

Um das Einzelgut 33 sicher in der zweiten Zugriffsposition 32 oberhalb der Sperre 20 zu halten, können entsprechende Haltevorrichtungen, wie beispielsweise Schienen, Vorsprünge oder Rasten, im Zugriffsbereich 16 angeordnet sein. Die Sperre 19 dient als Auflage, auf der das Einzelgut 33 mit oder ohne Tablar 7 abgelegt wird.

Sobald das Einzelgut 33 die zweite Zugriffsposition erreicht hat, wird die innere Sperre 29b nach unten verfahren und die Eintragsöffnung 31 verschlossen. Anschließend wird die äußere Sperre 29a geöffnet, um den Zugriff auf das Einzelgut 33 freizugeben.

Nach Entnahme des Einzelguts 33 wird der Vorgang in umgekehrter Reihenfolge durchgeführt und das leere Tablar 7 wieder in den ihm zugeordneten Lagerbereich 2, 3 überführt: Die äußere Sperre 29b verschließt die Zugriffsöffnung 17, woraufhin die innere Sperre 29a die Eintragsöffnung 31 freigibt; anschließend zieht das Fördermittel 11 das Tablar 7 in den Förderschacht 10 und legt das leere Tablar 5 im entsprechenden Lagerbereich 2, 3 ab.

Bei der Beschickung des Lagersystems 1 mit einem sperrigen Einzelgut 33 wird genau in der umgekehrten Reihenfolge vorgegangen: Das leere Tablar 7 wird bei geöffneter innerer Sperre 29b in den Zugriffsbereich 16 bewegt, wonach die innere Sperre 29b zum Verschließen der Eintragsöffnung 31 versperrt und die äußere Sperre 29a zum Öffnen der Zugriffsöffnung 17 heraufgefahren wird. Anschließend wird das Lagergut 33 auf das leere Tablar 7 gelegt, die äußere Sperre 29a nach unten und danach die innere Sperre 29b nach oben verfahren. Bei geschlossener äußerer Sperre 29a wird dann das Lagergut 33 durch das Fördermittel 11 in den Förderschacht 10 transportiert und in einem Lagerbereich 2, 3 abgelegt.

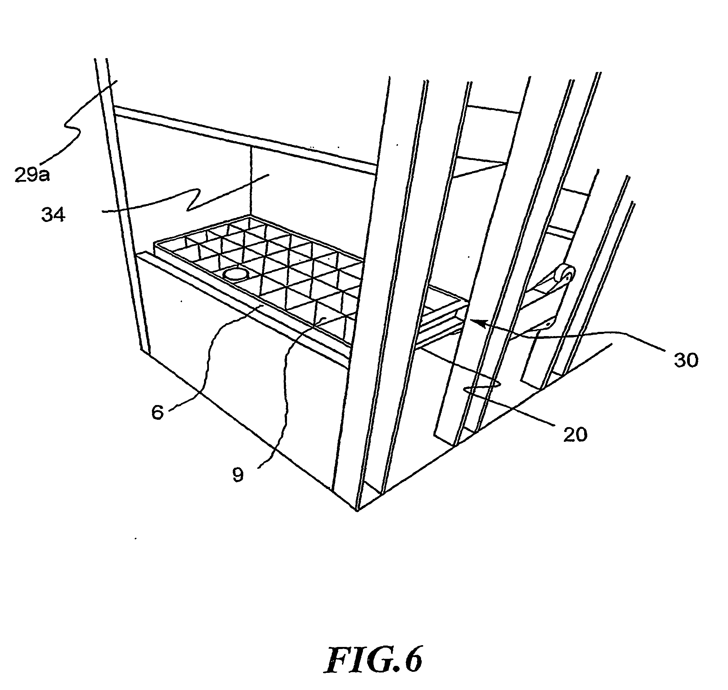

Der oben für sperriges Einzelgut 33 beschriebene Vorgang kann auch bei mehreren Lagergütern, die im Lagergutträger 6 eingelagert sind, durchgeführt werden. Dies ist im Folgenden mit Bezug auf die Figur 6 kurz beschrieben.

In Figur 6 ist ein drittes Ausführungsbeispiel eines Lagersystems gezeigt. In Figur 6 werden für Elemente, deren Aufbau und Funktion den Elementen der oben beschriebenen Ausführungsbeispielen entspricht, dieselben Bezugszeichen verwendet.

Im Unterschied zu den vorangegangenen Ausführungsbeispielen ist das Zugriffskontrollsystem 19 der Figur 6 als Nachrüstbausatz ausgebildet, der in ein bestehendes, herkömmliches Lagersystem 1 eingebaut wurde. Hierzu sind Befestigungsmittel (nicht gezeigt) an der Sperre vorgesehen, die nach Montage von außen nicht lösbar sind, so dass einer missbräuchlichen Entfernung des Zugriffskontrollsystems 19 bzw. der Sperre 20 vorgebeugt ist.

Das Lagersystem 1 der Figur 6 weist ferner im Unterschied zum Ausführungsbeispiel der Figuren 4 und 5 keine zusätzliche innere Sperre 29b, sondern lediglich eine äußere Sperre 29a auf. An der Stelle der inneren Sperre 29b befindet sich in diesem Ausführungsbeispiel eine feste Wand 34, die der Zugriffsöffnung 17 des Zugriffsbereichs 30 gegenüberliegt. Beim Ausführungsbeispiel der Figur 6 dient die Sperre 20 gleichzeitig als Sperre für den ersten Zugriffsbereich 16 und als innere Sperre für den zweiten Zugriffsbereich. In diesem Fall verschließt die Sperre 20 beim Überführen von Lagergut in den zweiten Zugriffsbereich die Eintragsöffnung für den zweiten Zugriffsbereich und bildet zusammen mit der äußeren Sperre 29b den Schleusenbereich.

Um den Lagergutträger 6 aus dem Lagerbereich in die in Figur 6 gezeigte Position und zurück zu überführen, wirken die Sperren 20 und 29b wie die Sperren 29a und 29b zusammen.

## Patentansprüche

1. Lagersystem (1) umfassend einen Lagerbereich (2, 3) zur Einlagerung von Lagergut (4) in wenigstens einen Lagerplatz (5), einen vom Lagerbereich (2, 3) örtlich getrennten Zugriffsbereich (16) zum Zugriff auf das im Zugriffsbereich befindliche Lagergut, ein Fördermittel (11) zum Transport des Lagerguts zwischen dem Lagerplatz und dem Zugriffsbereich, und einen Förderschacht (10), in dem das Fördermittel (11) in einer Förderrichtung hin- und her beweglich aufgenommen ist und der in Förderrichtung zwischen dem Lagerbereich und dem Zugriffsbereich angeordnet ist, **gekennzeichnet durch** ein dem Zugriffsbereich zugeordnetes Zugriffskontrollsystem (19) mit einer Sperre (20), die als eine Im Wesentlichen horizontale Plattform ausgebildet und in Abhängigkeit von einem Zugriffsberechtigungscode eines Benutzers zumindest abschnittsweise von einem Sperrzustand, in weichem der Zugriff auf das Lagergut versperrt ist, in einen Freigabezustand überführbar ist, in welchem der Zugriff auf das Lagergut freigegeben ist.

2. Lagersystem (1) nach Anspruch 1 **dadurch gekennzeichnet, dass** die Sperre (20) zwischen Benutzer und Lagergut (4) angeordnet ist.

3. Lagersystem (1) nach einem der oben genannten Ansprüche, **dadurch gekennzeichnet, dass** die Sperre (20) zur Freigabe des Zugriffsbereichs (16) beweglich am Lagersystem (1) gehalten ist.

4. Lagersystem (1) nach einem der oben genannten Ansprüche, **dadurch gekennzeichnet, dass** die Sperre (20) eine Mehrzahl von Teilsperren (23) aufweist, die jeweils in Abhängigkeit vom Zugriffsberechtigungscode von einem Freigabezustand in einen Sperrzustand überführbar sind und durch die im Sperrzustand jeweils ein Teilabschnitt des Zugriffsbereichs (15) versperrt ist.

5. Lagersystem (1) nach Anspruch 4, **dadurch gekennzeichnet, dass** eine Teilsperre (23) jeweils einem Fach (9) des Lagergutträgers (6) im Zugriffsbereich (16) zugeordnet ist.

6. Lagersystem (1) nach Anspruch 4 oder 5, mit wenigstens einem mit Fächern (9) versehenen Lagergutträger (6), **dadurch gekennzeichnet, dass** die Größe eines Faches (9) der Größe des von einer Teilsperre (23) verschlossenen Teilbereichs oder einem ganzzahligen Vielfachen dieser Größe entspricht

7. Lagersystem (1) nach einem der Ansprüche 4 bis 6, **dadurch gekennzeichnet, dass** die Teilsperren (23) im Wesentlichen klappenförmig ausgebildet sind.

8. Lagersystem (1) nach einem der oben genannten Ansprüche, **dadurch gekennzeichnet, dass** das Lagersystem (1) einen zweiten Zugriffsbereich (30) aufweist, in den das Lagergut (4) im Betrieb durch das Fördermittel (11) förderbar ist.

9. Lagersystem (1) nach Anspruch 8, **dadurch gekennzeichnet, dass** im zweiten Zugriffsbereich (32) das Lagergut (4) im Wesentlichen ohne Einwirkung des Zugriffskontrollsystems (19) gehalten ist.

10. Lagersystem (1) nach Anspruch 8 oder 9, **dadurch gekennzeichnet, dass** das Lagergut (4) im zweiten Zugriffsbereich (30) zwischen der Sperre (20) und dem Benutzer gehalten ist.

11. Lagersystem (1) nach einem der Ansprüche 8 bis 10, **dadurch gekennzeichnet, dass** die Sperre (20) zwischen der ersten Zugriffsposition (15) und der zweiten Zugriffsposition (32) angeordnet ist.

12. Lagersystem (1) nach einem der oben genannten Ansprüche, **dadurch gekennzeichnet, dass** das Lagersystem eine innere Sperre (29b) aufweist, die zwischen dem zweiten Zugriffsbereich (30) und dem Lagerbereich angeordnet ist.

13. Lagersystem (1) nach einem der oben genannten Ansprüche, **dadurch gekennzeichnet, dass** das Lagersystem (1) eine äußere Sperre (29a) aufweist, die zwischen dem Benutzer und dem zweiten Zugriffsbereich (30) angeordnet ist.

14. Lagersystem (1) nach einem der oben genannten Ansprüche, **dadurch gekennzeichnet, dass** das Lagersystem (1) ein Größenerfassungsmittel aufweist, durch das die Größe des Lagerguts (4) erfassbar ist, und dass das Lagergut (4) im Zugriffsbereich (16) in einer von seiner Größe abhängigen Zugriffsposition (15) angeordnet ist.

15. Lagersystem (1) nach einem der oben genannten Ansprüche, **dadurch gekennzeichnet, dass** die Lagerplätze (5) stationär im Lagerbereich angeordnet sind.

16. Lagersystem (1) nach einem der oben genannten Ansprüche, **dadurch gekennzeichnet, dass** der Lagerbereich (2, 3) durch sich gegenüberliegende Regalsäulen gebildet ist, zwischen denen der Förderschacht (10) angeordnet ist.

17. Zugriffskontrollsystem (19) zum Einbau in ein Lagersystem (1) mit einem Lagerbereich (2, 3) zur Einlagerung von Lagergut (4) in wenigstens einem Lagerplatz (5), mit einem vom Lagerbereich (2, 3) örtlich getrennten Zugriffsbereich (16) zum Zugriff auf das sich im Zugriffsbereich befindliche Lagergut (4) sowie mit einem Fördermittel (11) zum Transport des Lagerguts (4) zwischen dem Lagerplatz (5) und der Zugriffsposition (15, 32), wobei das Zugriffskontrollsystem (19) im eingebauten Zustand zwischen einem Benutzer und dem Lagergut (4) im Zugriffsbereich angeordnet ist und eine Sperre (20), die als eine im Wesentlichen horizontale Plattform ausgebildet ist, aufweist, die von einem Sperrzustand, in dem der Zugriff auf das Lagergut (4) versperrt ist, in einen Freigabezustand überführbar ist, in dem der Zugriff auf das Lagergut (4) freigegeben ist.

## Claims

1. A storage system (1) comprising a storage region (2, 3), for storing storage articles (4) in at least one storage location (5), an access region (16), which is at a separate location from the storage region (2, 3) and is intended for access to the storage articles located in the access region, a conveying means (11), for transporting the storage articles between the storage location and the access region, and a conveying shaft (10), in which the conveying means (11) is accommodated such that it can be moved back and forth in a conveying direction and which is arranged between the storage region and the access region, as seen in the conveying direction, **characterized by** an access control system (19) which is assigned to the access region and has a barrier (20) which is designed as an essentially horizontal platform and, in dependence on a user's access authorization code, can be transferred, at least in certain parts, from a blocking state, in which access to the storage articles is blocked, into a release state, in which access to the storage articles is released.

2. The storage system (1) as claimed in claim 1, **characterized in that** the barrier (20) is arranged between the user and storage articles (4) .

3. The storage system (1) as claimed in one of the abovementioned claims, **characterized in that** the barrier (20), for release of the access region (16), is retained in a moveable manner on the storage system (1).

4. The storage system (1) as claimed in one of the abovementioned claims, **characterized in that** the barrier (20) has a plurality of sub-barriers (23) which can each be transferred, in dependence on the access authorization code, from a release state into a blocking state and by means of which, in the blocking state, in each case part of the access region (15) is blocked.

5. The storage system (1) as claimed in claim 4, **characterized in that** one sub-barrier (23) is assigned in each case to one compartment (9) of the storage-article carrier (6) in the access region (16).

6. The storage system (1) as claimed in claim 4 or 5 having at least one storage-article carrier (6) provided with compartments (9) [sic], **characterized in that** the size of the compartment (9) corresponds to the size of the subregion closed by a sub-barrier (23) or to a whole-numbered multiple of this size.

7. The storage system (1) as claimed in one of claims 4 to 6, **characterized in that** the sub-barriers (23) are of essentially flap-like design.

8. The storage system (1) as claimed in one of the abovementioned claims, **characterized in that** the storage system (1) has a second access region (30), into which the storage articles (4) can be conveyed by the conveying means (11) during operation.

9. The storage system (1) as claimed in claim 8, **characterized in that** the storage articles (4) are retained in the second access region (32) essentially without the action of the access control system (19).

10. The storage system (1) as claimed in claim 8 or 9, **characterized in that** the storage articles (4) in the second access region (30) are retained between the barrier (20) and the user.

11. The storage system (1) as claimed in one of claims 8 to 10, **characterized in that** the barrier (20) is arranged between the first access position (15) and the second access position (32).

12. The storage system (1) as claimed in one of the abovementioned claims, **characterized in that** the storage system has an inner barrier (29b), which is arranged between the second access region (30) and the storage region.

13. The storage system (1) as claimed in one of the abovementioned claims, **characterized in that** the storage system (1) has an outer barrier (29a), which is arranged between the user and the second access region (30).

14. The storage system (1) as claimed in one of the abovementioned claims, **characterized in that** the storage system (1) has a size-detection means which can detect the size of the storage articles (4), and **in that** the storage articles (4) in the access region (16) are arranged in a size-dependent access position (15).

15. The storage system (1) as claimed in one of the abovementioned claims, **characterized in that** the storage locations (5) are arranged in a stationary manner in the storage region.

16. The storage system (1) as claimed in one of the abovementioned claims, **characterized in that** the storage region (2, 3) is formed by mutually opposite rack columns, between which the conveying shaft (10) is arranged.

17. An access control system (19) for installing in a storage system (1), having a storing region (2, 3), for storing storage articles (4) in at least one storage location (5), having an access region (16), which is at a separate location from the storage region (2, 3) and is intended for access to the storage articles (4) located in the access region, and having a conveying means (11), for transporting the storage articles (4) between the storage location (5) and the access position (15, 32), the access control system (19), in the installed state, being arranged between a user and the storage articles (4) in the access region and having a barrier (20) which is designed as an essentially horizontal platform and which can be transferred from a blocking state, in which access to the storage articles (4) is blocked, into a release state, in which access to the storage articles (4) is released.

## Revendications

1. Système de stockage (1) comprenant une zone de stockage (2, 3) pour le chargement de marchandises stockées (4) en au moins un emplacement de stockage (5), une zone d'accès (16) séparée localement de la zone de stockage (2, 3) et servant à accéder aux marchandises stockées situées dans la zone d'accès, un moyen de transport (11) pour le transport des marchandises stockées entre l'emplacement de stockage et la zone d'accès, et un puits de transport (10), dans lequel le moyen de transport (11) est logé de manière à être mobile en va-et-vient dans la direction de transport, et qui est disposé entre la zone de stockage et la zone d'accès dans la direction de transport, **caractérisé par** un système de contrôle d'accès (19), qui est associé à la zone d'accès et comporte un dispositif de blocage (20), qui est agencé sous la forme d'une plateforme sensiblement horizontale et peut être transféré, en fonction d'un code d'autorisation d'accès d'un utilisateur, au moins par intervalles depuis un état de blocage, dans lequel l'accès aux marchandises stockées est empêché, dans un état de libération, dans lequel l'accès aux marchandises stockées est libéré.

2. Système de stockage (1) selon la revendication 1, **caractérisé en ce que** le dispositif de blocage (20) est disposé entre l'utilisateur et les marchandises stockées (4).

3. Système de stockage (1) selon l'une des revendications précédentes, **caractérisé en ce que** le dispositif de blocage (20) est retenu de manière à être mobile sur le système de stockage, pour la libération de la zone d'accès (16) .

4. Système de stockage (1) selon l'une des revendications précédentes, **caractérisé en ce que** le dispositif de blocage (20) comporte une multiplicité d'éléments de blocage partiels (23), qui peuvent être transférés, respectivement en fonction du code d'autorisation d'accès, d'un état de libération dans un état de blocage et par lesquels respectivement une section partielle de la zone d'accès (15) est bloquée dans l'état de blocage.

5. Système de stockage (1) selon la revendication 4, **caractérisé en ce qu'**un élément de blocage partiel (23) est associé respectivement à un casier (9) du support (6) des marchandises stockées, dans la zone d'accès (16).

6. Système de stockage (1) selon la revendication 4 ou 5, comportant au moins un support (6) pour les marchandises stockées, comportant des casiers (9), **caractérisé en ce que** la taille d'un casier (9) correspond à la taille d'une zone partielle, fermée par un élément de blocage partiel (23), ou à un multiple entier de cette taille.

7. Système de stockage (1) selon l'une des revendications 4 à 6, **caractérisé en ce que** les éléments de blocage partiels (23) sont agencés sensiblement sous la forme de trappes.

8. Système de stockage (1) selon l'une des revendications précédentes, **caractérisé en ce que** le système de stockage (1) comporte une seconde zone d'accès (3), dans laquelle les marchandises stockées (4) peuvent être transportées, en fonctionnement, à l'aide du moyen de transport (11).

9. Système de stockage (1) selon la revendication 8, **caractérisé en ce que** les marchandises stockées (4) sont retenues dans la seconde zone d'accès (32) essentiellement sans l'action du système de contrôle d'accès (19).

10. Système de stockage (1) selon la revendication 8 ou 9, **caractérisé en ce que** les marchandises stockées (4) sont retenues dans la seconde zone d'accès (30) entre le dispositif de blocage (20) et l'utilisateur.

11. Système de stockage (1) selon l'une des revendications 8 à 10, **caractérisé en ce que** le dispositif de blocage (20) est disposé entre la première position d'accès (15) et la seconde position d'accès (32).

12. Système de stockage (1) selon l'une des revendications précédentes, **caractérisé en ce que** le système de stockage possède un dispositif de blocage intérieur (29b), qui est disposé entre la seconde zone d'accès (30) et la zone de stockage.

13. Système de stockage (1) selon l'une des revendications précédentes, **caractérisé en ce que** le système de stockage (1) comporte un dispositif de blocage extérieur (29a), qui est disposé entre l'utilisateur et la seconde zone d'accès (30).

14. Système de stockage (1) selon l'une des revendications précédentes, **caractérisé en ce que** le système de stockage (1) possède un moyen de détection de taille, à l'aide duquel la taille de la marchandise stockée (4) peut être détectée, et que la marchandise stockée (4) est disposée, dans la zone d'accès (16), dans une position d'accès (15) qui dépend de sa taille.

15. Système de stockage (1) selon l'une des revendications précédentes, **caractérisé en ce que** les emplacements de stockage (15) sont disposés de façon fixe dans la zone de stockage.

16. Système de stockage (1) selon l'une des revendications précédentes, **caractérisé en ce que** la zone de stockage (2, 3) est formée par des colonnes de rayonnages s'opposant, entre lesquelles est disposé le puits de transport (10).

17. Système de contrôle d'accès (19) destiné à être monté dans un système de stockage comportant une zone de stockage (2, 3) pour le chargement de marchandises stockées (4) en au moins un emplacement de stockage (5), comportant une zone d'accès (16) séparée localement de la zone de stockage (2, 3), pour l'accès aux marchandises stockées (4) situées dans la zone d'accès, ainsi qu'un moyen de transport (11) pour le transport des marchandises stockées (4) entre l'emplacement de stockage (5) et la position d'accès (15, 32), le système de contrôle d'accès (19) étant disposé, à l'état monté, entre un utilisateur et les marchandises stockées (4) dans la zone d'accès et comportant un dispositif de blocage (20), qui est agencé sous la forme d'une plateforme sensiblement horizontale et qui peut être transféré d'un état de blocage, dans lequel l'accès aux marchandises stockées (4) est bloqué, dans un état de libération, dans lequel l'accès aux marchandises stockées (4) est libéré.
